(19) Europäisches Patentamt
European Patent Office
Office européen des brevets

(11) **EP 4 617 517 A1**

(12) **EUROPÄISCHE PATENTANMELDUNG**

(43) Veröffentlichungstag:
**17.09.2025 Patentblatt 2025/38**

(21) Anmeldenummer: **24162715.7**

(22) Anmeldetag: **11.03.2024**

(51) Internationale Patentklassifikation (IPC):
*F16C 17/03* (2006.01)       *F16C 17/06* (2006.01)
*F16C 17/10* (2006.01)       *F16C 33/10* (2006.01)

(52) Gemeinsame Patentklassifikation (CPC):
**F16C 17/03; F16C 17/06; F16C 17/10;
F16C 17/105; F16C 33/10; F16C 33/1045;
F16C 33/108; F16C 33/1085;** F16C 2360/31

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(71) Anmelder: **Aktiebolaget SKF**
**415 50 Göteborg (SE)**

(72) Erfinder: **Buettner, Martin**
**97359 Schwarzach (DE)**

(74) Vertreter: **Kuhstrebe, Jochen**
**SKF GmbH**
**Gunnar-Wester-Straße 12**
**97421 Schweinfurt (DE)**

(54) **KIPPSEGMENTLAGERANORDNUNG**

(57)    Offenbart wird eine Kippsegmentlageranordnung (2) für ein hydrodynamisches Gleitlager (1) zum hydrodynamischen Lagern eines Bauteils (4), wobei die Kippsegmentlageranordnung (2) ein Kippsegment (20) und ein das Kippsegment (20) lagerndes Lagerelement (30) aufweist, wobei das Kippsegment (20) und das Lagerelement (30) als Gelenklager, insbesondere als Axialgelenklager, ausgebildet sind, und wobei das Kippsegment (20) zumindest eine erste und eine zweite Fläche aufweist, wobei erste Fläche als hydrodynamische Bauteillagerfläche (21) ausgebildet ist und dazu ausgelegt ist, das hydrodynamisch zu lagernde Bauteil (4) hydrodynamisch zu lagern, und die zweite Fläche als Kippsegmentlagergleitfläche (22) mit zumindest teilweise einer nach außen gewölbten Kugelfläche ausgebildet ist, die mit einer an dem Lagerelement (30) ausgebildeten Lagerelementgleitfläche (32) zusammenwirkt, die zumindest teilweise eine nach innen gewölbte Kugelfläche aufweist, wobei zwischen der Kippsegmentlagergleitfläche (22) und der Lagerelementgleitfläche (32) eine Dichtung (12) vorgesehen ist, die einen zwischen der Lagerelementgleitfläche (32) und der Kippsegmentlagergleitfläche (22) definierten Lagerinnenraum (14) nach außen abschließt und an dem Kippsegment (20) im Bereich des Lagerinnenraums (14) eine Kontaktfläche (23) begrenzt, die in Gleitkontakt mit dem Lagerelement (30) ist, wobei weiterhin das Kippsegment (20) derart dimensioniert ist, dass eine durch eine Orthogonalprojektion der hydrodynamischen Bauteillagerfläche (21) erzeugte Bauteillagerprojektionsfläche P1 größer ist als eine durch eine Orthogonalprojektion der Kontaktfläche (23) erzeugte Kontaktflächenprojektionsfläche P2, wobei ein Verhältnis von Kontaktflächenprojektionsfläche P2 zu Bauteillagerprojektionsfläche P1 folgender Relation genügt: $0,5 \leq P2/P1 < 1$.

Fig. 2

**Beschreibung**

Technisches Gebiet

Vorliegende Erfindung betrifft eine Kippsegmentlageranordnung gemäß dem Oberbegriff von Patentanspruch 1, ein hydrodynamisches Gleitlager mit einer derartigen Kippsegmentlageranordnung, sowie eine Windkraftanlage oder eine Unterwasserturbine mit einem derartigen hydrodynamischen Gleitlager.

Technischer Hintergrund

Bei einem Kippsegmentlager ist eine Gleitfläche eines Gleitlagers in eine Vielzahl von Untergleitflächen unterteilt. Diese Untergleitflächen werden über Kippsegmente bereitgestellt, die kippbeweglich von einem Lagerelement gelagert werden. Mehrere dieser Kippsegmentlageranordnungen aus Kippsegment und Lagerelement werden dann an einem Gehäuse angebracht, und stellen das Kippsegmentlager bereit. Die Kippbarkeit der Kippsegmente ermöglicht dem zu lagernden Bauteil Einstellbewegungen auszuführen, die durch eine Lagerlast und/oder Formungenauigkeiten oder Lagerungenauigkeit des gelagerten Bauteils und/oder fluidbedingten Druckunterschieden bedingt sind.

Derartige Kippsegmentlager werden insbesondere als hydrodynamische Gleitlager ausgestaltet, bei denen sich im Betrieb des Lagers zwischen dem Kippsegment und dem zu lagernden Bauteil ein Schmiermittelfilm bildet, auf dem das zu lagernde Bauteil "aufschwimmt", so dass zwischen einer Bauteillagerfläche des Kippsegments und dem Bauteil selbst ein fluidgefüllter Lagerspalt entsteht. Der Lagerspalt ist dabei keilförmig oder sichelförmig ausgebildet und weist einen Bereich mit hohem Schmiermitteldruck (im engen Bereich des Schmierspalts) und einen Bereich mit niedrigerem Druck (am größeren Bereich des Schmierspalts) auf. Das zur Erzeugung des hydrodynamischen Druckes im Lagerspalt erforderliche Schmiermittel wird weitgehend drucklos der Bauteillagerfläche in dem Bereich mit niedrigem Druck zugeführt.

Das Schmiermittel wird im Betrieb in den Lagerspalt hineingezogen, wodurch sich der Druck im Schmiermittel in dem Lagerspalt erhöht und das zu lagernde Bauteil aufschwimmt.

Die Kippbeweglichkeit eines Kippsegments selbst wird beispielsweise dadurch erreicht, dass die Kippsegmentlageranordnung als Axial-Gelenklageranordnung ausgebildet ist, wobei das Kippsegment weiterhin eine Kippsegmentlagergleitfläche mit zumindest teilweise einer nach außen gewölbten, konvexen Kugelfläche aufweist, die mit einer an dem Lagerelement ausgebildeten Lagerelementgleitfläche zusammenwirkt, die zumindest teilweise eine nach innen gewölbte konkave Kugelfläche aufweist.

Üblicherweise sind Kippsegmentlagergleitfläche und die Lagerelementgleitfläche mit Öl oder Fett geschmierte Gleitpaarungen oder auch Gleitpaarungen mit wartungsfreien Gleitschichten. Bei derartigen Kippsegmentlageranordnungen kann eine hohe Kontaktspannung zwischen den Gleitpaarungen herrschen, was zu einem Verschleiß der Gleitflächen und somit zu einer kürzeren Lebensdauer führen kann. Des Weiteren können Gleitkombinationen, wie z.B. Stahl/Stahl, in der Kippsegmentlageranordnung, insbesondere bei hohen Lasten, nicht eingesetzt werden.

Kippsegmentlager werden beispielsweise zum Lagern einer Rotorhauptwelle oder einer Getriebewelle in einer Windkraftanlage oder einer Unterwasserturbine verwendet. Um einen langen wartungsarmen Betrieb der Windkraftanlage oder der Unterwasserturbine, aber auch bei anderer Einsatzgebieten, zu ermöglichen, besteht ein Bedürfnis nach einem besonders verschleißarmen Kippsegmentlager.

Es ist deshalb die Aufgabe der vorliegenden Erfindung, ein Kippsegmentlager mit möglichst reibungsarmer Lagerung der Kippsegmente bereitzustellen, um die Lebensdauer zu erhöhen und auch besonderes langlebige und/oder fluidtolerante Gleitkombinationen, wie Stahl/Stahl einsetzen zu können. Dabei ist insbesondere eine Anwendung im Fokus, bei der eine Wartung von Lagern sehr aufwändig ist, wie beispielsweise bei Windkraftanlagen oder Unterwasserturbinen.

Zusammenfassung der Erfindung

Diese Aufgabe wird durch eine Kippsegmentlageranordnung gemäß Patentanspruch 1, sowie ein Kippsegmentlager und eine Windkraftanlage bzw. eine Unterwasserturbine mit eine Kippsegmentlager gelöst.

Im Folgenden wird eine Kippsegmentlageranordnung für ein Kippsegmentlager, insbesondere ein hydrodynamisches Gleitlager zum hydrodynamischen Lagern eines Bauteils vorgestellt, wobei die Kippsegmentlageranordnung ein Kippsegment und ein das Kippsegment lagerndes Lagerelement aufweist, und das Kippsegment und das Lagerelement als Gelenklager, insbesondere als Axialgelenklager, ausgebildet sind. Weiterhin weist das Kippsegment zumindest eine erste und eine zweite Fläche auf, wobei erste Fläche als hydrodynamische Bauteillagerfläche ausgebildet ist und dazu ausgelegt ist, das hydrodynamisch zu lagernde Bauteil hydrodynamisch zu lagern. Die zweite Fläche ist als Kippsegmentlagergleitfläche, genauer gesagt als Kippsegment-Gelenklagerfläche, mit zumindest teilweise einer nach außen gewölbten (konvexen) Kugelfläche ausgebildet, die mit einer an dem Lagerelement ausgebildeten Lagerelementgleitfläche, genauer einer Lagerelement-Gelenklagerfläche, zusammenwirkt, die zumindest teilweise eine nach innen gewölbte (konkave) Kugelfläche aufweist. Zwischen der Kippsegmentlagergleitfläche und der Lagerelementgleitfläche ist eine Dichtung vorgesehen, die einen zwischen der Lagerelementgleitfläche und der Kippsegmentlagergleitfläche definierten Lagerinnenraum nach außen abschließt und an dem Kippsegment im Bereich des Lagerinnenraums eine Kontaktfläche begrenzt, die in Gleitkontakt mit dem Lagerelement ist. Weiterhin ist das Kippsegment derart dimensioniert, dass eine durch eine Orthogonalprojektion der hydrodynamischen Bauteillagerfläche erzeugte Bauteillagerprojektionsfläche P1 größer ist als eine durch eine Orthogonalprojektion der Kontaktfläche erzeugte Kontaktflächenprojektionsfläche P2, wobei ein Verhältnis von Kontaktflächenprojektionsfläche zu Bauteillagerprojektionsfläche folgender Relation genügt:

$$0,5 \leq P2/P1 < 1.$$

Durch diese Relation und geometrische Ausgestaltung lässt sich eine Kippsegmentlageranordnung bereitstellen, bei der die hydrodynamische Bauteillagerfläche und die Gleitpaarung der Gelenklageranordnung aufeinander abgestimmt sind, so dass die Kippsegmentlageranordnung mit deutlich geringerer Flächenlast betrieben werden kann, wodurch sich der Gleitflächenverschleiß verringert und die Lebensdauer erhöht. Dadurch kann auch ein Einsatz in schwer zu wartenden Anwendungen, wie beispielsweise in einer der Windkraftanlage oder in einer Unterwasserturbine ermöglicht werden.

Dabei ist weiterhin ein Ausführungsbeispiel bevorzugt, bei dem das Verhältnis von Kontaktflächenprojektionsfläche zu Bauteillagerprojektionsfläche folgender Relation genügt:

$$0,8 \leq P2/P1 \leq 0.99.$$

Noch bevorzugter ist ein Ausführungsbeispiel, bei dem das Verhältnis von Kontaktflächenprojektionsfläche zu Bauteillagerprojektionsfläche folgender Relation genügt:

$$0,9 \leq P2/P1 \leq 0,99.$$

Bei diesen Verhältnissen hat sich herausgestellt, dass der Verschleiß besonders gering ist.

Gemäß einem weiteren bevorzugten Ausführungsbeispiel weist das Kippsegment weiterhin zumindest eine erste Durchgangsbohrung auf, die sich von der Bauteillagerfläche zu der Kontaktfläche erstreckt und dazu ausgelegt ist, ein Fluid (Schmiermittel), das für die hydrodynamische Lagerung des Bauteils verwendet wird, von der Bauteillagerfläche in den Lagerinnenraum zu leiten. Dadurch kann das Fluid bzw. Schmiermittel, das zur hydrodynamischen Lagerung des Bauteils verwendet wird, auch für die Schmierung der Gleitflächen der Gelenklagerung verwendet werden.

Bei einer derartigen Ausgestaltung sorgt das Schmiermittel zudem dafür, dass eine Entlastung an den Gleitflächen im Lagerinnenraum auftritt, so dass der Verschleiß weiter vermindert wird.

Weiterhin kann mit der oben genannten Flächenrelation sichergestellt werden, dass zwar das Bauteil hydrodynamisch gelagert wird, aber das Kippsegment selbst nicht in dem Lagerelement aufschwimmt, was zu einer führungslosen Lagerung führen würde, sondern nach wie vor gewissen Reibkräften, sowie geometrischer Führung unterworfen ist, um eine definierte Position bereitzustellen, in der das Kippsegment das Bauteil sicher abstützen und führen kann.

Um Sicherzustellen, dass das in den Lagerinnenraum transportierte Fluid einen ausreichenden, insbesondere maximalen, Druck erzeugt, ist weiterhin bevorzugt, wenn die erste Durchgangsbohrung einen an der Bauteillagerfläche angeordneten Fluideinlass aufweist, der in einem Bereich der Bauteillagerfläche angeordnet ist, in dem sich im Betrieb des hydrodynamischen Lagers ein hoher Fluiddruck einstellt. Durch den hohen Fluiddruck wird das Fluid in die Durchgangsbohrung und von dort in den Lagerinnenraum transportiert, wodurch sich in dem Lagerinnenraum ein hoher Fluiddruck aufbaut. Die oben genannte Flächenrelation bzw. Flächenrelationen sorgen dabei dafür, dass, weitgehend unabhängig von der Größe der Durchgangsbohrung eine ausreichender Fluiddruck in dem Lagerinnenraum erzeugt wird, um die Gleitflächen zu schmieren und zu entlasten, aber der Fluiddruck nie so groß wird, dass ein "Aufschwimmen" des Kippsegments auftritt.

Gemäß einem weiteren bevorzugten Ausführungsbeispiel weist das Kippsegment weiterhin zumindest eine zweite Durchgangsbohrung auf, die sich von der Bauteillagerfläche zu der Kontaktfläche erstreckt, und dazu ausgelegt ist, ein Fluid, das in dem Lagerinnenraum gesammelt ist, aus dem Lagerinnenraum zu der Bauteillagerfläche zu leiten. Dadurch kann ein Fluiddurchsatz in dem Lagerinnenraum erreicht werden, wodurch verhindert wird, dass das Schmiermittel in dem Lagerinnenraum altert und seine Schmierfähigkeit verliert. Durch das gezielte Abführen von Schmiermittel aus dem Lagerinnenraum kann dagegen sichergestellt werden, dass das Schmiermittel im Lagerinnenraum ausgetauscht wird. Die Einstellung des Abflusses ist optional durch eine verstellbare Drossel möglich, die in der zweite Durchgangsbohrung angeordnet sein kann.

Dabei ist insbesondere bevorzugt, wenn die zweite Durchgangsbohrung einen an der Bauteillagerfläche angeordneten Fluidauslass aufweist, der in einem Bereich der Bauteillagerfläche angeordnet ist, in dem sich im Betrieb des hydrodynamischen Lagers ein niedriger Fluiddruck einstellt. Dadurch muss nicht gegen einen hohen Fluiddruck gearbeitet werden, um das Schmiermittel aus dem Lagerinnenraum zu transportieren, was den Austausch und Durchsatz von Schmiermittel in dem Lagerinnenraum aufgrund des Druckunterschieds erleichtert. Dabei ist insbesondere vorteilhaft, dass der Druckunterschied zwischen dem Bereich mit hohem Druck und dem Bereich mit niederem Druck in dem Lagerspalt 6 so gewählt ist, dass zwar ein Fluidaustausch stattfindet, aber trotzdem ein ausreichender Fluiddruck in dem Lagerinnenraum aufgebaut wird, der eine Entlastung des Kippsegments ermöglicht.

Gemäß eines weiteren bevorzugten Ausführungsbeispiels ist an der Kontaktfläche und/oder an der Lagerelementgleitfläche im Bereich des Lagerinnenraums mindestens eine Fluidverteilstruktur in Form zumindest einer Vertiefung oder Nut ausgebildet ist, die dazu ausgelegt ist, ein Fluid im Lagerinnenraum zu verteilen. Ebenfalls ist ein Ausführungsbeispiel vorteilhaft, wenn das Material des Kippsegments eine Porosität, beispielsweise aus einem gesinterten Material, beispielsweise offenporige Sinterbronze oder offenporiger Sinterstahl, hergestellt ist, das Poren aufweist, wobei über die Poren bzw. die Porosität sich das Fluid in dem Lagerinnenraum verteilen kann. Dadurch kann der Fluid- bzw. Schmiermitteldruck schnell in dem Lagerinnenraum verteilt werden. Insgesamt kann durch die Fluidverteilstruktur sichergestellt werden, dass der Fluiddruck möglichst schnell nach Betriebsaufnahme des Kippsegmentlager in dem Lagerinnenraum verteilt wird, so dass die Gleitflächen überall in Kürze geschmiert und entlastet sind, so dass ebenfalls der Verschleiß verringert wird.

Wie oben erwähnt ist der Lagerinnenraum mittels einer Dichtung begrenzt. Diese Dichtung sorgt zum einen dafür, den Lagerinnenraum vor Verunreinigungen zu schützen. Darüber hinaus verhindert sie ein unkontrolliertes Abfließen des Schmiermittels das in dem Lagerinnenraum vorhanden ist.

Ist zudem eine Durchgangsbohrung für eine hydraulische Entlastung vorgesehen, dann sorgt die Dichtung für einen entsprechenden Druckaufbau im Lagerinnenraum, der der hydraulischen Entlastung dient. In diesem Fall ist die Dichtung so ausgeführt, dass möglichst wenig Leckage auftritt. Dies kann beispielsweise mit einer Lippendichtung erreicht werden. Besonders bevorzugt ist ein Ausführungsbeispiel, bei dem die Dichtung als Balgdichtung, insbesondere als beidseitig fixierte Balgdichtung, ausgebildet ist. Da die von dem Kippsegment in dem Lagerelement ausgeführten Bewegung kleinräumig sind und lediglich dem Ausgleich von Einstellungsunterschieden des zu lagernden Bauteils dienen, kann zwischen Lagerelement und Kippsegment eine Balgdichtung vorgesehen werden. Diese hat zudem den Vorteil, dass sie den Lagerinnenraum im Wesentlichen leckagefrei abdichtet.

Ist die Leckage durch die Dichtung zu hoch, ist weiterhin eine Ausführungsbeispiel vorteilhaft, bei dem die Kippsegmentlageranordnung weiterhin eine zusätzliche Fluidpumpe aufweist, die dazu ausgelegt ist, ein Fluid in den Lagerinnenraum einzuspeisen und/oder einen bestimmten Fluiddruck zu erzeugen. Dadurch kann sichergestellt werden, dass auch bei übermäßiger Leckage durch die Dichtung eine ausreichende Schmierung und Entlastung im Lagerinnenraum bestehen bleibt. Die Fluidpumpe kann in das Lagerelement integriert sein. Ebenfalls ist eine Ausführungsbeispiel vorteilhaft, bei dem die Fluidpumpe außerhalb des Lagerelements angeordnet ist und in dem Lagerelement eine Durchgangsbohrung vorgesehen ist, durch die Fluid von der Fluidpumpe in den Lagerinnenraum überführt werden kann.

Die Fluidpumpe kann dabei lösbar über eine Fluidleitung mit der Durchgangsbohrung verbunden sein.

Gemäß einem weiteren Ausführungsbeispiel weist die Kippsegmentlageranordnung weiterhin einen Drucksensor auf. Dieser Drucksensor dient dazu, den Schmiermitteldruck bzw. allgemein Fluiddruck in dem Lagerinnenraum zu überwachen und zu messen und so sicherzustellen, dass die Zuführung von Schmiermittel in dem Lagerinnenraum auf einem vordefinierten Druckniveau erfolgt, so dass das Kippsegment zwar gut geschmiert und entlastet ist, aber nicht "aufschwimmt". Der Drucksensor ist vorzugsweise in einer Aussparung, wie beispielsweise einer der Durchgangsbohrungen, oder in einer der Vertiefungen der Verteilstruktur, aufgenommen. Selbstverständlich kann der Drucksensor auch in einer separat ausgebildeten Drucksensoraufnahme angeordnet sein.

Ein weiterer Aspekt vorliegender Erfindung betrifft ein hydrodynamisches Gleitlager mit einem Gehäuse, an dem mehrere Kippsegmentlageranordnungen, wie oben detailliert besprochen, angebracht sind, wobei die Kippsegmentlageranordnungen derart an dem Gehäuse angeordnet und angebracht sind, dass ein zu lagerndes Bauteil, insbesondere eine Welle und/oder Wellenflansch, an den Bauteillagerflächen der Kippsegmentlageranordnungen hydrodynamisch gelagert ist.

Ein noch weiterer Aspekt vorliegender Erfindung betrifft eine Windkraftanlage oder Unterwasserturbine mit einer Rotornabe, die dazu ausgelegt ist, eine Rotorhauptwelle anzutreiben, wobei sich die Rotorhauptwelle in eine über die Rotorhauptwelle mit der Rotornabe verbundenen Gondel erstreckt und dort einen darin aufgenommenen Generator antreibt. Weiterhin kann zwischen Rotorhauptwelle und Generator eine Getriebeanordnung mit einer Getriebeausgangswelle vorgesehen sein, die mit dem Generator verbunden ist. Erfindungsgemäß ist bei dieser Windkraftanlage oder Unterwasserturbine die Rotorhauptwelle und/oder eine Getriebeausgangswelle mittels zumindest eines hydrodynamischen Gleitlagers wie oben angegeben gelagert.

Da das hydrodynamische Gleitlager aufgrund der oben beschriebenen Kippsegmentlageranordnung besonders wartungsfrei und verschleißfest ist, aber gleichzeitig hohe Lasten und hohe Geschwindigkeiten abstützen kann, ist es bei Anwendungen, die schwierig zu warten sind, besondere vorteilhaft.

Weitere Vorteile und vorteilhafte Ausführungsformen sind in der Beschreibung, den Zeichnungen und den Ansprüchen angegeben. Dabei sind insbesondere die in der Beschreibung und in den Zeichnungen angegebenen Kombinationen der Merkmale rein exemplarisch, so dass die Merkmale auch einzeln oder anders kombiniert vorliegen können.

Kurze Figurenbeschreibung

Im Folgenden soll die Erfindung anhand von in den Zeichnungen dargestellten Ausführungsbeispielen näher beschrieben werden. Dabei sind die Ausführungsbeispiele und die in den Ausführungsbeispielen gezeigten Kombinationen rein exemplarisch und sollen nicht den Schutzbereich der Erfindung festlegen. Dieser wird allein durch die anhängigen Ansprüche definiert.

Es zeigen:

Fig. 1: eine schematische Darstellung eines hydraulischen Gleitlagers mit mehreren Kippsegmentlageranordnungen gemäß einem Ausführungsbeispiel der Erfindung;

Fig. 2: eine schematische Detailschnittansicht eines ersten Ausführungsbeispiels einer Kippsegmentlageranordnung für ein in Fig. 1 dargestelltes Gleitlager;

Fig. 3: eine schematische Detailschnittansicht eines zweiten Ausführungsbeispiels einer die Kippsegmentlageranordnung; und

Fig. 4: eine schematische Detailschnittansicht eines dritten Ausführungsbeispiels einer Kippsegmentlageranordnung.

Detaillierte Beschreibung der Erfindung

Im Folgenden werden gleiche oder funktionell gleichwirkende Elemente mit denselben Bezugszeichen gekennzeichnet.

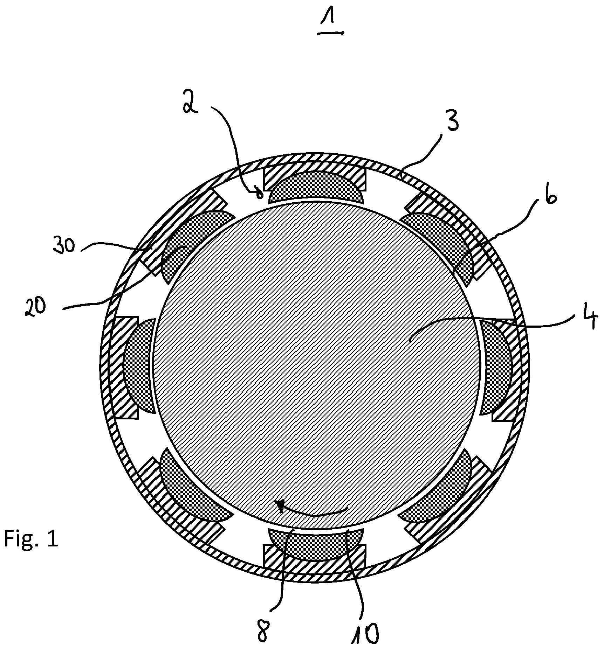

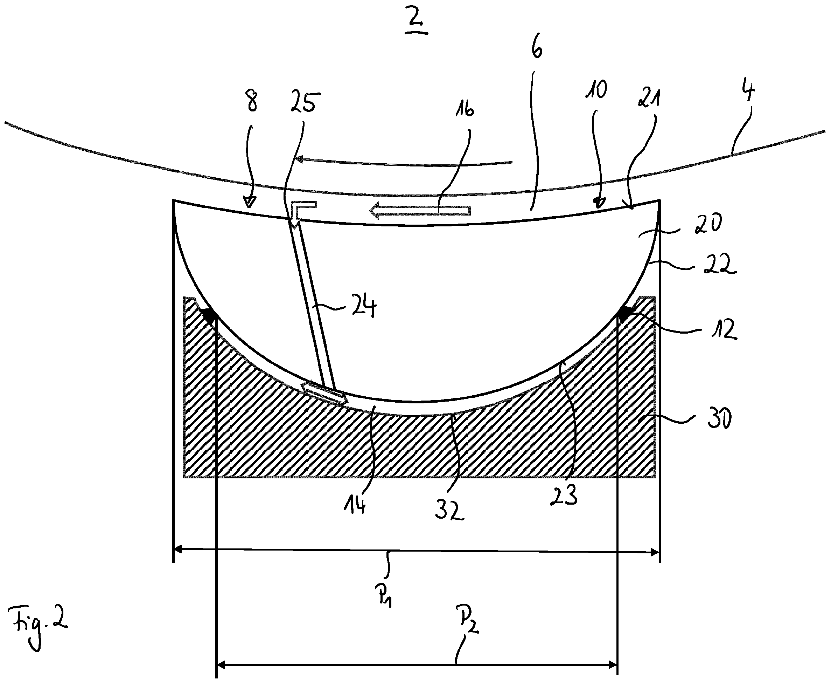

Fig. 1 und die Detailansichten der Fig. 2 bis 4 zeigen schematische Darstellungen eines hydraulischen Gleitlagers 1 mit mehreren Kippsegmentlageranordnungen 2, die in einem ringförmigen Lagergehäuse 3 angeordnet sind. Das Lagergehäuse 3 kann auch anders ausgestaltet sein, insbesondere kann das Lagergehäuse 3 lediglich eine ringförmige Bohrung aufweisen oder die Kippsegmentlageranordnungen 2 sind ringförmig an dem Lagergehäuse 3 verteilt. Ebenfalls kann statt der hier dargestellten Radiallagerung auch eine Axiallageranordnung vorgesehen sein, oder eine Radial-/Axiallagerung. Die Kippsegmentlageranordnungen sind dann entsprechend verteilt, um die entsprechenden Gleitflächen der Axial-, Radial- und/oder Axial/Radiallagerung bereitzustellen.

Dabei zeigen die Detailfiguren 2 bis 4 verschiedene Ausgestaltungen der Kippsegmentlageranordnung 2. Die Kippsegmentlageranordnungen 2 sind derart angeordnet, dass sie in der Mitte eine Öffnung für ein zu lagerndes Bauteil 4, wie z.B. eine Welle ausbilden. Jede Kippsegmentlageranordnung 2 umfasst dabei ein Kippsegment 20 und ein das Kippsegment lagerndes Lagerelement 30, wobei das Kippsegment 20 und das Lagerelement 30 als Gelenklager, insbesondere als Axialgelenklager, ausgebildet sind. Jedes Kippsegment 20 weist weiterhin zumindest eine erste und eine zweite Fläche 21, 22 aufweist, wobei erste Fläche 21 als hydrodynamische Bauteillagerfläche 21 ausgebildet ist und dazu ausgelegt ist, das hydrodynamisch zu lagernde Bauteil 4 hydrodynamisch zu lagern (siehe insbesondere Fig. 2 bis 4). Die zweite Fläche 22 ist dagegen als Kippsegmentlagergleitfläche 22 ausgebildet, die für die Bereitstellung der Gelenklagerung mit zumindest teilweise einer nach außen gewölbten, konkaven Kugelfläche ausgebildet ist. Das Lagerelement 30 weist eine komplementär zur Kippsegmentlagergleitfläche 22 ausgestaltete Lagerelementgleitfläche 32 auf, die in dem dargestellten Fall zumindest teilweise als eine nach innen gewölbte konvexe Kugelfläche ausgebildet ist.

Wie Fig. 1 und insbesondere den Detailansichten der Fig. 2 bis 4 zu entnehmen, verbleibt zwischen dem Bauteil 4 und der hydrodynamischen Bauteillagerfläche 22 im Betrieb ein Spalt 6, in dem sich im Betrieb des Lagers (Drehrichtung des Bauteils ist schematisch gekennzeichnet durch den Pfeil) ein Schmiermittelfilm (nicht dargestellt) bildet, auf dem das zu lagernde Bauteil 4 "aufschwimmt". Der Lagerspalt 6 gestaltet sich im Betrieb (nicht dargestellt) als keilförmig bzw. sichelförmig aus und weist einen Bereich 8 mit hohem Schmiermitteldruck (im engen Bereich des Schmierspalts) und einen Bereich mit niedrigerem Druck 10 (am größeren Bereich des Schmierspalts) auf. Das zur Erzeugung des hydrodynamischen Druckes im Lagerspalt 6 erforderliche Schmiermittel wird weitgehend drucklos der Bauteillagerfläche 22 in dem Bereich mit niedrigem Druck 10 zugeführt. Die Schmiermittelzuführung selbst ist nicht dargestellt. Das zugeführte Schmiermittel wird im Betrieb in den Lagerspalt 6 durch die Rotation der Welle hineingezogen, wodurch sich der Druck im Schmiermittel in dem Lagerspalt 6 erhöht und das zu lagernde Bauteil 4 aufschwimmt.

Weiterhin ist den Detailansichten der Fig. 2 bis 4 zu entnehmen, dass zwischen der Kippsegmentlagergleitfläche 22 und der Lagerelementgleitfläche 32 eine umfängliche Dichtung 12 vorgesehen ist, die einen zwischen der Lagerelementgleitfläche 32 und der Kippsegmentlagergleitfläche 22 definierten Lagerinnenraum 14 nach außen abschließt.

In dem Lagerinnenraum 14 ist weiterhin ein Schmiermittel vorgesehen, das dazu dient, die Gleitflächenpaarung der Gelenklagerung aus Kippsegmentlagergleitfläche 22 und Lagerelementgleitfläche 32 zu schmieren.

Die Dichtung 12 begrenzt weiterhin an dem Kippsegment 20 im Bereich des Lagerinnenraums 14 eine Kontaktfläche 23, die in tatsächlichem Gleitkontakt mit dem Lagerelement 30 ist.

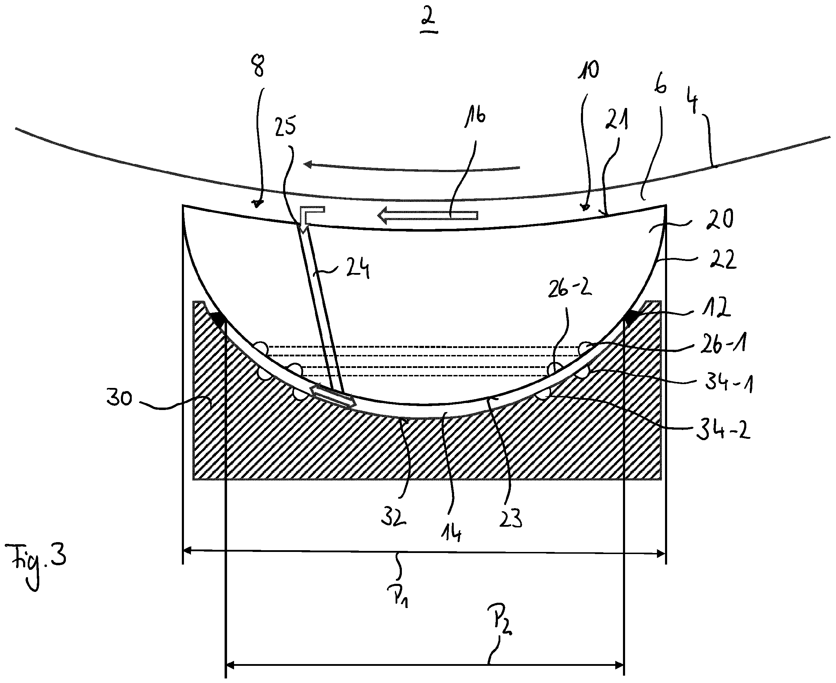

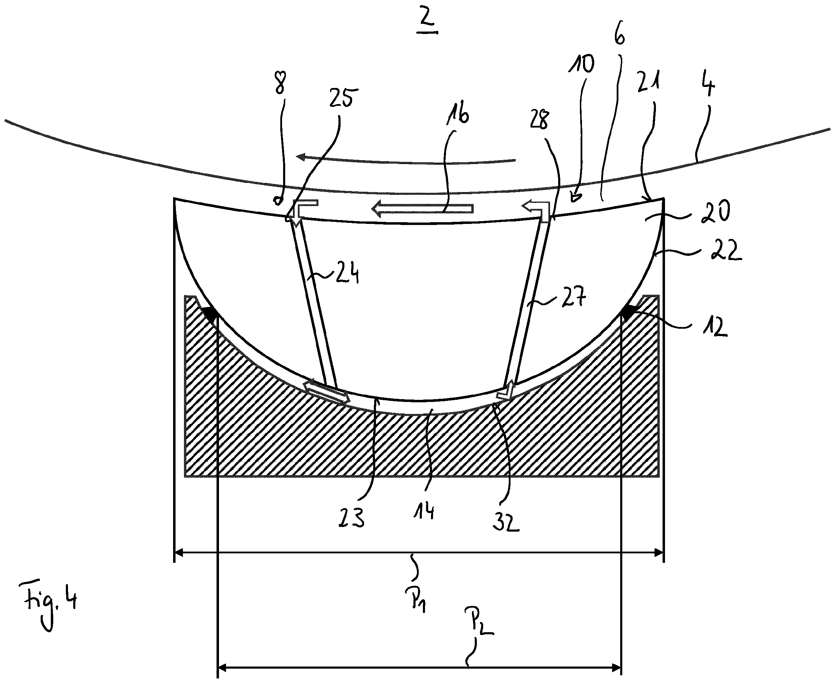

Weiterhin ist insbesondere den Fig. 2 bis 4 zu entnehmen, dass das Kippsegment 20 derart dimensioniert ist, dass eine durch eine Orthogonalprojektion der hydrodynamischen Bauteillagerfläche erzeugte Bauteillagerprojektionsfläche P1 größer ist als eine durch eine Orthogonalprojektion der Kontaktfläche erzeugte Kontaktflächenprojektionsfläche P2, wobei ein Verhältnis von Kontaktflächenprojektionsfläche zu Bauteillagerprojektionsfläche folgender Relation genügt: $0,5 \leq P2/P1 < 1$. In der Schnittansicht der Fig. 3 und 4 sind die Projektionsflächen lediglich als in Form von unterschiedlichen Längen darstellbar (siehe Pfeile).

Beide Projektionsflächen sind bevorzugt fast gleich groß, so dass die Projektionsflächenrelation bevorzugt der Relation: $0{,}8 \leq P2/P1 \leq 0.99$, und noch bevorzugter der Relation genügt: $0{,}9 \leq P2/P1 \leq 0{,}99$.

Wie weiterhin in der Schnittansicht der Fig. 2 bis 4 dargestellt, weist das Kippsegment 20 weiterhin zumindest eine erste Durchgangsbohrung 24 auf, die sich von der Bauteillagerfläche 21 zu der Kontaktfläche 23 erstreckt. Diese Durchgangsbohrung 24 dient dazu Schmiermittel 16, das für die hydrodynamische Lagerung des Bauteils 4 verwendet wird, von der Bauteillagerfläche 21 in den Lagerinnenraum 14 zu leiten. Dadurch kann das Fluid bzw. Schmiermittel, das zur hydrodynamischen Lagerung des Bauteils 4 verwendet wird, auch für die Schmierung der Gleitflächen 22; 32 der Gelenklagerung und die Entlastung der Kontaktfläche 23 verwendet werden. Dabei "pumpt" der durch die hydrodynamische Lagerung des Bauteils 4 erzeugte hydrodynamische Druck einen Teil des Schmiermittels vom Spalt 6 zwischen Kippsegment 20 und Bauteil 4 in den Lagerinnenraum 14 bzw. leitet den Schmiermitteldruck aus dem Bereich des Lagerspalts 6 an das in dem Lagerinnenraum befindliche Schmiermittel weiter.

Um einen Verlust von Schmiermittel aus dem Lagerinnenraum 14 zu vermeiden und den Aufbau eines Schmierfilms bzw. Entlastungsdrucks im Lagerinnenraum 14 zu begünstigen, ist die Dichtung 12 möglichst als leckagefreie Dichtung ausgebildet. Besonders bevorzugt ist dabei eine Balgdichtung, die sowohl an dem Kippsegment 20 als auch an dem Lagerelement 30 dichtend befestigt ist.

Die Abdichtung des Lagerinnenraums 14 sorgt zudem dafür, dass durch das in den Lagerinnenraum 14 eingebrachte Schmiermittel eine Entlastung an den Gleitflächen 22; 32 im Lagerinnenraum 14 auftritt, so dass der Verschleiß weiter vermindert wird.

Weiterhin kann mit der oben genannten Flächenrelation sichergestellt werden, dass zwar das Bauteil 4 hydrodynamisch gelagert wird, aber das Kippsegment 20 selbst nicht in dem Lagerelement 30 aufschwimmt, was zu einer führungslosen Lagerung führen würde, sondern nach wie vor gewissen Reibkräften und geometrischer, formbedingter Führung unterworfen ist, um eine definierte Position bereitzustellen, in der das Kippsegment 20 das Bauteil 4 sicher abstützen kann.

Um Sicherzustellen, dass ein ausreichender Fluiddruck in den Lagerinnenraum 14 erzeugt wird, ist weiterhin bevorzugt, wenn die erste Durchgangsbohrung 24 einen an der Bauteillagerfläche 21 angeordneten Fluideinlass 25 aufweist, der in einem Bereich 8 der Bauteillagerfläche 21 angeordnet ist, in dem sich im Betrieb des hydrodynamischen Lagers ein hoher Fluiddruck einstellt. Durch den hohen Fluiddruck wird das Fluid in die Durchgangsbohrung 24 und von dort in den Lagerinnenraum 14 transportiert bzw. Druck weiterleitet. Die oben genannte Flächenrelation bzw. Flächenrelationen sorgen dabei dafür, dass, weitgehende unabhängig von der Größe der Durchgangsbohrung 24 ein ausreichender Fluiddruck in den Lagerinnenraum 14 geführt wird, um die Gleitflächen 22; 32 bzw. Kontaktfläche 23 zu schmieren und zu entlasten, aber kein so großer Fluiddruck dem Lagerinnenraum 14 aufgebaut wird zugeführt, dass ein "Aufschwimmen" des Kippsegments 20 auftritt.

Um das Schmiermittel 16 möglichst schnell in dem Lagerinnenraum 14 zu verteilen, kann, wie in dem Ausführungsbeispiel der Fig. 3 gezeigt, an der Kontaktfläche 23 bzw. an der Lagerelementgleitfläche 32 im Bereich des Lagerinnenraums 14 mindestens eine Fluidverteilstruktur 26; 34 in Form zumindest einer Vertiefung oder Nut ausgebildet sein. In dem dargestellten Ausführungsbeispiel sind sowohl an der Kontaktfläche 23 als auch der Gleitfläche 32 derartige Verteilstrukturen 26; 34 ausgebildet. Es ist jedoch klar, dass diese auch nur an der Kontaktfläche 32 oder nur an der Lagerelementgleitfläche 32 ausgebildet sein können. Solche Verteilstrukturen 26; 34 sind insbesondere bei zähflüssigeren Fluid wichtig. Insgesamt kann durch die Fluidverteilstruktur sichergestellt werden, dass das Fluid möglichst schnell nach Betriebsaufnahme des Kippsegmentlager in dem Lagerinnenraum 14 verteilt wird, so dass die Gleitflächen 22, 32 bzw. der Kontaktfläche 23 überall in Kürze geschmiert bzw. entlastet sind, so dass ebenfalls der Verschleiß verringert wird.

Fig. 4 zeigt ein weiteres bevorzugtes Ausführungsbeispiel, bei dem neben der ersten Durchgangsbohrung 24 in dem Kippsegment 20 eine zweite Durchgangsbohrung 27 vorgesehen ist, die sich von der Bauteillagerfläche 21 zu der Kontaktfläche 22 erstreckt. Im Gegensatz zu der ersten Durchgangsbohrung 24 ist die zweite Durchgangsbohrung 27 aber nicht dazu ausgelegt Fluid aus dem Spalt 6 in Richtung Lagerinnenraum 14 zu transportieren, sondern um Schmiermittel, insbesondere verbrauchtes Schmiermittel, aus dem Lagerinnenraum 14 zu dem Lagerspalt 6 zu transportieren. Dadurch kann ein Fluiddurchsatz in dem Lagerinnenraum 14 erreicht werden, wodurch verhindert wird, dass das Schmiermittel in dem Lagerinnenraum 14 altert und seine Schmierfähigkeit verliert. Durch das gezielte Abführen von Schmiermittel aus dem Lagerinnenraum 14 kann dagegen sichergestellt werden, dass das Schmiermittel im Lagerinnenraum 14 ausgetauscht wird.

Dabei ist insbesondere bevorzugt, wenn die zweite Durchgangsbohrung 27 einen an der Bauteillagerfläche 21 angeordneten Fluidauslass 28 aufweist, der in einem Bereich 10 der Bauteillagerfläche angeordnet ist, in dem sich im Betrieb des hydrodynamischen Lagers ein niedriger Fluiddruck einstellt. Dadurch muss nicht gegen einen hohen Fluiddruck gearbeitet werden, um das Schmiermittel aus dem Lagerinnenraum 14 zu transportieren, was den Austausch und Durchsatz von Schmiermittel in dem Lagerinnenraum 14 aufgrund des Druckunterschieds innerhalb der Fläche des hydrodynamischen Spalts 6 aufrechterhält.

Selbstverständlich können, wenn auch nicht dargestellt, auch in diesem Ausführungsbeispiel Fluidverteilstrukturen 26; 34 vorgesehen sein, die für eine Fluidverteilung im Lagerinnenraum 14 sorgen.

Durch die Entlastung der Kippsegmente und die automatische Versorgung, und optional auch Entsorgung, von Schmiermittel in den Lagerinnenraum kann ein hydrodynamisches Gleitlager bereitgestellt werden, das besonders wartungsarm ist, aber gleichzeitig hohen Belastungen standhält. Dadurch ist ein derartiges Gleitlager insbesondere für einen Einsatz in wartungsproblematischen Anwendungen geeignet, wie beispielsweise als Lagerung für eine Rotorhauptwelle oder Getriebewelle in einer Windkraftanlage oder einer Unterwasserturbine.

**Bezugszeichenliste**

| | |
|---|---|
| 1 | hydrodynamisches Gleitlager |
| 2 | Kippsegmentlageranordnung |
| 3 | Lagergehäuse |
| 4 | hydrodynamisch gelagertes Bauteil |
| 6 | Lagerspalt |
| 8 | Bereich mit hohem Fluiddruck |
| 10 | Bereich mit niederem Fluiddruck |
| 12 | Dichtung |
| 14 | Lagerinnenraum |
| 16 | Schmiermittel |
| 20 | Kippsegment |
| 21 | Bauteillagerfläche |
| 22 | Kippsegmentlagergleitfläche |
| 23 | Kontaktfläche |
| 24 | erste Durchgangsbohrung |
| 25 | Fluideinlass |
| 26 | Fluidverteilstruktur |
| 27 | zweite Durchgangsbohrung |
| 28 | Fluidauslass |
| 30 | Lagerelement |
| 32 | Lagerelementgleitfläche |
| 34 | Fluidverteilstruktur |
| P1 | Bauteillagerprojektionsfläche |
| P2 | Kontaktflächenprojektionsfläche |

**Patentansprüche**

1. Kippsegmentlageranordnung (2) für ein hydrodynamisches Gleitlager (1) zum hydrodynamischen Lagern eines Bauteils (4), wobei die Kippsegmentlageranordnung (2) ein Kippsegment (20) und ein das Kippsegment (20) lagerndes Lagerelement (30) aufweist, wobei das Kippsegment (20) und das Lagerelement (30) als Gelenklager, insbesondere als Axialgelenklager, ausgebildet sind, und wobei das Kippsegment (20) zumindest eine erste und eine zweite Fläche aufweist, wobei erste Fläche als hydrodynamische Bauteillagerfläche (21) ausgebildet ist und dazu ausgelegt ist, das hydrodynamisch zu lagernde Bauteil (4) hydrodynamisch zu lagern, und die zweite Fläche als Kippsegmentlagergleitfläche (22) mit zumindest teilweise einer nach außen gewölbten Kugelfläche ausgebildet ist, die mit einer an dem Lagerelement (30) ausgebildeten Lagerelementgleitfläche (32) zusammenwirkt, die zumindest teilweise eine nach innen gewölbte Kugelfläche aufweist, wobei zwischen der Kippsegmentlagergleitfläche (22) und der Lagerelementgleitfläche (32) eine Dichtung (12) vorgesehen ist, die einen zwischen der Lagerelementgleitfläche (32) und der Kippsegmentlagergleitfläche (22) definierten Lagerinnenraum (14) nach außen abschließt und an dem Kippsegment (20) im Bereich des Lagerinnenraums (14) eine Kontaktfläche (23) begrenzt, die in Gleitkontakt mit dem Lagerelement (30) ist, wobei weiterhin das Kippsegment (20) derart dimensioniert ist, dass eine durch eine Orthogonalprojektion der hydrodynamischen Bauteillagerfläche (21) erzeugte Bauteillagerprojektionsfläche P1 größer ist als eine durch eine Orthogonalprojektion der Kontaktfläche (23) erzeugte Kontaktflächenprojektionsfläche P2, wobei ein Verhältnis von Kontaktflächenprojektionsfläche P2 zu Bauteillagerprojektionsfläche P1 folgender Relation genügt: $0,5 \leq P2/P1 < 1$.

2. Kippsegmentlageranordnung (2) nach Anspruch 1, wobei das Verhältnis von Kontaktflächenprojektionsfläche P2 zu Bauteillagerprojektionsfläche P1 folgender Relation genügt: $0,8 \leq P2/P1 \leq 0.99$.

3. Kippsegmentlageranordnung (2) nach Anspruch 1 oder 2, wobei das Verhältnis von Kontaktflächenprojektionsfläche P2 zu Bauteillagerprojektionsfläche P1 folgender Relation genügt: $0,9 \leq P2/P1 \leq 0,99$.

4. Kippsegmentlageranordnung (2) nach einem der vorhergehenden Ansprüche, wobei das Kippsegment (20) weiterhin zumindest eine erste Durchgangsbohrung (24) aufweist, die sich von der Bauteillagerfläche (21) zu der Kontaktfläche (23) erstreckt und dazu ausgelegt ist, ein Fluid, das für die hydrodynamische Lagerung des Bauteils verwendet wird, von der Bauteillagerfläche (21) in den Lagerinnenraum (14) zu leiten.

5. Kippsegmentlageranordnung (2) nach Anspruch 4, wobei die erste Durchgangsbohrung (24) einen an der Bauteillagerfläche (21) angeordneten Fluideinlass (25) aufweist, der in einem Bereich der Bauteillagerfläche (21) angeordnet ist, in dem sich im Betrieb des hydrodynamischen Lagers ein hoher Fluiddruck einstellt.

6. Kippsegmentlageranordnung (2) nach einem der vorhergehenden Ansprüche, wobei das Kippsegment (20) weiterhin zumindest eine zweite Durchgangsbohrung (27) aufweist, die sich von der Bauteillagerfläche (21) zu der Kontaktfläche (23) erstreckt, und dazu ausgelegt ist, ein Fluid, das in dem Lagerinnenraum (14) gesammelt ist, aus dem Lagerinnenraum (14) zu der Bauteillagerfläche (21) zu leiten.

7. Kippsegmentlageranordnung (2) nach Anspruch 6, wobei die zweite Durchgangsbohrung (27) einen an der Bauteillagerfläche (21) angeordneten Fluidauslass (28) aufweist, der in einem Bereich der Bauteillagerfläche (21) angeordnet ist, in dem sich im Betrieb des hydrodynamischen Lagers ein niedriger Fluiddruck einstellt.

8. Kippsegmentlageranordnung (2) nach einem der vorhergehenden Ansprüche, wobei an der Kontaktfläche (23) und/oder an der Lagerelementgleitfläche (32) im Bereich des Lagerinnenraums (14) mindestens eine Fluidverteilstruktur (26; 34) in Form einer Vertiefung und/oder einer Nut und/oder einer Porosität ausgebildet ist, die dazu ausgelegt ist, ein Fluid im Lagerinnenraum (14) zu verteilen.

9. Kippsegmentlageranordnung (2) nach einem der vorhergehenden Ansprüche, wobei die Dichtung (12) als Balgdichtung ausgebildet ist.

10. Kippsegmentlageranordnung (2) nach einem der vorhergehenden Ansprüche, wobei die Kippsegmentlageranordnung (2) weiterhin eine Fluidpumpe aufweist, und das Lagerelement (30) weiterhin eine Durchgangsbohrung (24; 27) aufweist, die den Lagerinnenraum (14) mit der Fluidpumpe verbindet, wobei sich die Durchgangsbohrung (24; 27) von einer Außenfläche des Lagerelements (30) zu dem Lagerinnenraum (14) erstreckt.

11. Kippsegmentlageranordnung (2) nach einem der vorhergehenden Ansprüche, wobei weiterhin in der Kippsegmentlageranordnung (2), vorzugsweise in der Durchgangsbohrung (24; 27), ein Drucksensor angeordnet ist.

12. Hydrodynamisches Gleitlager (1) mit einem Gehäuse (3), an dem mehrere Kippsegmentlageranordnungen (2) nach einem der vorhergehenden Ansprüche angebracht sind, wobei die Kippsegmentlageranordnungen (2) derart an dem Gehäuse (3) angeordnet und angebracht sind, dass ein zu lagerndes Bauteil, insbesondere eine Welle an den Bauteillagerflächen (21) der Kippsegmentlageranordnungen (2) hydrodynamisch gelagert ist.

13. Windkraftanlage oder Unterwasserturbine mit einer Rotornabe, die dazu ausgelegt ist, eine Rotorhauptwelle anzutreiben, wobei sich die Rotorhauptwelle in eine über die Rotorhauptwelle mit der Rotornabe verbundenen Gondel erstreckt und dort einen darin aufgenommenen Generator antreibt, wobei vorzugsweise zwischen Rotorhauptwelle und Generator eine Getriebeanordnung mit einer Getriebeausgangswelle, die mit dem Generator verbunden ist, vorgesehen ist, **dadurch gekennzeichnet, dass** die Rotorhauptwelle und/oder eine Getriebeausgangswelle mittels zumindest eines hydrodynamischen Gleitlagers (1) nach Anspruch 12 gelagert ist.

Fig. 1

Fig. 2

EP 4 617 517 A1

Fig. 3

Fig. 4

EP 4 617 517 A1

Europäisches
Patentamt

European
Patent Office

Office européen
des brevets

**EUROPÄISCHER RECHERCHENBERICHT**

Nummer der Anmeldung

EP 24 16 2715

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | FR 2 260 710 A1 (RATEAU SA [FR]) 5. September 1975 (1975-09-05) | 1-5,9, 10,12,13 | INV. F16C17/03 |
| Y | * Seite 1, Zeile 4 - Zeile 6; Abbildungen 1,2 * | 6-8,11 | F16C17/06 F16C17/10 |
| | * Seite 3, Zeile 7 - Zeile 9 * | | F16C33/10 |
| | * Seite 2, Zeile 8 - Seite 3, Zeile 4 * | | |
| | ----- | | |
| Y | EP 0 023 657 B1 (KRUPP POLYSIUS AG [DE]) 11. Mai 1983 (1983-05-11) | 8,11 | |
| A | * Seite 4, Spalte 6, Zeile 8 - Zeile 19; Abbildungen 1-3 * | 1-7,9, 10,12,13 | |
| | * Seite 2, Spalte 3, Zeile 39 - Zeile 54 * | | |
| | ----- | | |
| Y | US 3 351 394 A (HOOKER RALPH J) 7. November 1967 (1967-11-07) | 6,7 | |
| A | * Abbildung 3 * | 1-5,8-13 | |
| | ----- | | |

**RECHERCHIERTE SACHGEBIETE (IPC)**

F16C

Der vorliegende Recherchenbericht wurde für alle Patentansprüche erstellt

| Recherchenort | Abschlußdatum der Recherche | Prüfer |
|---|---|---|
| Den Haag | 8. Oktober 2024 | Kovács, Endre |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-10-2024

| Im Recherchenbericht angeführtes Patentdokument | | Datum der Veröffentlichung | Mitglied(er) der Patentfamilie | | Datum der Veröffentlichung |
|---|---|---|---|---|---|
| FR 2260710 | A1 | 05-09-1975 | KEINE | | |
| EP 0023657 | B1 | 11-05-1983 | AT | E3324 T1 | 15-05-1983 |
| | | | BR | 8004857 A | 10-02-1981 |
| | | | CA | 1154486 A | 27-09-1983 |
| | | | DE | 2931383 A1 | 19-02-1981 |
| | | | EP | 0023657 A1 | 11-02-1981 |
| | | | ES | 8106789 A1 | 01-09-1981 |
| | | | US | 4322116 A | 30-03-1982 |
| | | | ZA | 804213 B | 26-08-1981 |
| US 3351394 | A | 07-11-1967 | KEINE | | |

Für nähere Einzelheiten zu diesem Anhang : siehe Amtsblatt des Europäischen Patentamts, Nr.12/82